# EUROPEAN PATENT APPLICATION

(11) **EP 1 826 715 A1**
(43) Date of publication of application: **29.08.2007**
(21) Application number: 05258114.7
(22) Date of filing: 30.12.2005
(51) Int. Cl.: G06Q 30/00

(54) **Generating data messages**

(71) Applicant: BRITISH TELECOMMUNICATIONS public limited company, London EC1A 7AJ (GB)
(72) Inventor: The designation of the inventor has not yet been filed
(74) Representative: Sayer, Robert David

(57) **Abstract**

In a method of generating a data message, an order request is received by a first program 103, herein referred to as the MSE program. The request includes data identifying the order to the MSE program 103 by specifying an order reference number. In a second step 122, the MSE program 103 sends the identification data to a harvest program 106 which accesses one or more records associated with the identified order, said records being held on one or more databases maintained by a service provider. In a third step 124, the harvest program 106 retrieves data from each database in accordance with the list of data expressions DE1-DEn which, in this case, specify the database and database fields from which data is to be taken. In a fourth step 126, the harvest program 106 sends the retrieved data back to the MSE program 103 which, in a fifth step 128, transfers the data to an assembly program 107. In a sixth step 130, the assembly program 107 assembles the retrieved data into a predefined structure using the assembly actions A1-An. In a seventh step 132, the structured data is sent back to the MSE program 103 where it is stored ready for transmission to a service management platform 13.

## Description

The present invention relates to a method and system for generating data messages, particularly, though not exclusively, data messages which comprise data elements retrieved from a data source.

It is common for software elements to communicate with each other by way of data messages. For example, a user purchasing a product from an online retailer will send a data message from their computer to the retailer's computer over the Internet, the message identifying the user, e.g. by way of a reference number, and the product they wish to purchase. At the retailer's ordering platform, the identity information is used to retrieve further information from a data source, the further information including, for example, the user's full name, delivery address and payment credentials. This information is placed into a further data message which is sent to the retailer's fulfilment platform which interprets the information to ensure the requested product is sent to the user's delivery address and the correct payment debited. In order that this data message can be automatically processed at the fulfilment platform, the message usually has to conform to a predefined format or structure so that, for example, the address information is not interpreted as the user's name, and vice versa.

Structured data messages are conventionally generated using a dedicated software program. The structure of the message and the logical operations required to retrieve data items from external sources form an integral part of said software program. Should it be necessary to include a different combination of data items in the message and/or a different message format or structure, the program itself requires modification. This is undesirable since even a simple change to a program will require alteration to other parts of the code.

According to a first aspect of the invention, there is provided a method of generating a data message comprising a plurality of data elements retrieved from one or more data sources, the method comprising: (a) providing a first software element having access to (i) the or each data source and (ii) storage means storing a plurality of data expressions, each data expression referencing a respective data item stored in the or each data source; (b) receiving, at the first software element, a request message identifying the or each data source; (c) in response to receipt of said request message, accessing the or each data source and retrieving therefrom each data element referenced by the data expressions in the storage means; and (d) arranging the data elements into a predetermined format to provide a data message.

By specifying the data items to be included in the data message using expressions external to (or logically separated from) the first software element, it follows that modifying the data message is a relatively straightforward process. All that is required is for the data expressions to be updated, this process requiring minimal programming expertise.

The data elements typically comprise stored information, such as the information stored within fields of a database. The first software element is preferably a self-contained program or script arranged to perform some predetermined data processing operation when executed on a processor. For the sake of clarity, the term 'retrieved' is intended to cover the process of copying data elements stored in a data source with subsequent processing operations being performed on the copy.

The message so generated may comprise an extensible mark-up language (XML) document.

Further preferred features of the invention are set out in the accompanying set of claims.

The invention will now be described, by way of example, with reference to the accompanying drawings, in which:
Figure 1 is a block diagram of a network arrangement for enabling a telecommunications service to be ordered from a service provider;
Figure 2 is a diagram representing a plurality of software platforms that comprise an ordering system of the service provider;
Figure 3 is a block diagram showing functional components which are used to generate a data message in first and second embodiments of the invention;
Figure 4 is a flow diagram showing steps in a method of generating a data message in the first and second embodiments of the invention;
Figure 5 is a block diagram showing, in detail, functional components which are used to generate a data message in the first and second embodiments of the invention;
Figure 6 is a table representing static data in a service provider database;
Figure 7 is a table representing order data stored in a service provider database;
Figure 8 is a pipelined architecture arranged to generate a data message using a plurality of discrete data-retrieval steps; and
Figure 9 is a UML class diagram showing the key interfaces and classes employed in the second embodiments of the invention

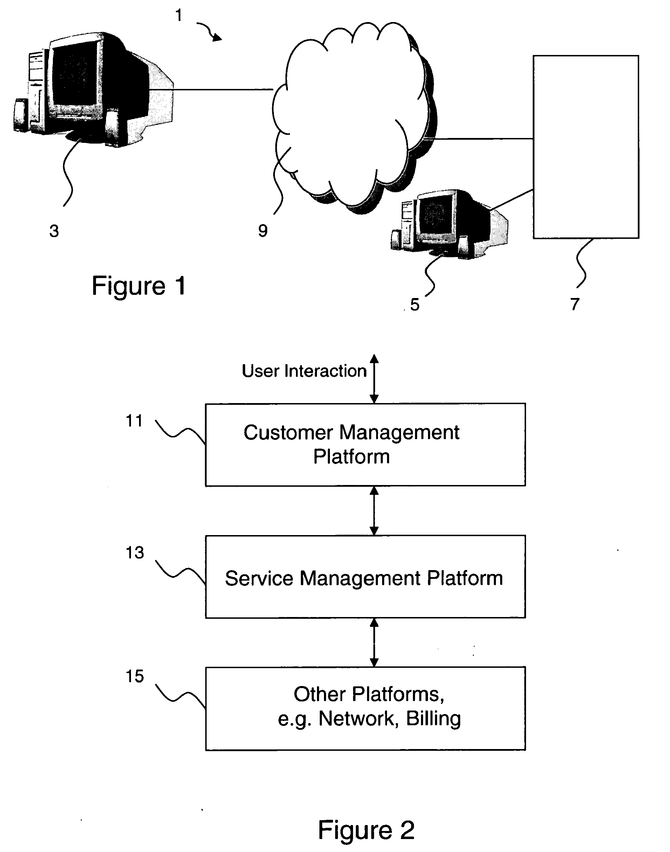

Referring to Figure 1, a network arrangement 1 for implementing service ordering with a telecommunications service provider comprises first and second personal computers (PCs) 3, 5 connected to a service ordering system 7. The first PC 3 is connected to the service ordering system 7 by a network connection 9, e.g. the Internet. The second PC 5 is connected directly to the service ordering system 7 and represents a PC operated by a customer services representative of the service provider. The network arrangement 1 therefore provides two methods by which a user may submit a service order with the service provider. In the first method, the user operates the first PC 3 to access a webpage provided by the service provider and, by means of following a series of steps displayed on the webpage, inputs and submits information to the service ordering system 7 using the Internet 9. In the second method, the user communicates information (e.g. by means of a telephone call or email) to a customer services representative who enters said information using the second PC 5.

Referring to Figure 2, the service ordering system 7 comprises a customer management platform 11, a service management platform 13 and one or more other platforms 15, for example a network platform or billing platform. The customer management platform 11, hereafter referred to as the CRM platform, is responsible for interacting with the user (or customer services representative, if applicable) by sending and receiving information to/from the first or second PCs 3, 5 using an internet protocol (IP). Such information may comprise details of facilities available to the user, for example ordering a new service.

The CRM platform 11 is arranged to prompt the user for information, for example details of the service they require. In addition, the CRM platform 11 is arranged to formally register the customer enquiry on the service ordering system 7 and to assign the order a unique customer order reference. Some or all of this information is stored in a database (not shown in Figure 2) for future use.

The service management platform 7 is responsible for handling fulfilment of the order by automatically assigning the order to a queue and allocating necessary resources. This will typically involve interaction with the one or more other platforms indicated in Figure 2. As an example, if a user orders ADSL broadband for their existing telephone line, the user will specify this at the CRM platform together with any further information such as the required speed, e.g. 1 or 2 Mbits/sec, and/or whether the customer-end installation should be performed by the customer or an engineer. This information will be stored in one or more databases belonging to the service provider. At the service management platform 13, a message will be sent to the network platform to allocate an ADSL connection at the customer's local exchange. A message will also be sent to the billing platform to update the customer's details and to ensure that they will be appropriately charged for the service once fulfilment is complete. If the customer selects customer installation, a further message will be sent to the service provider's equipment facility so that appropriate hardware, e.g. an ADSL router, is allocated and dispatched to the customer's address. If engineer installation is selected, the router will be allocated and an entry made on an engineer's schedule.

It will be appreciated that the service ordering system 7 relies on the exchange of data messages between various components, namely the PCs 3, 5 and the CRM platform 11, the CRM platform and the service management platform 13, and the service management platform and one or more other platforms 15. The data messages have to conform to a predefined structure so that the component receiving the data message will correctly and automatically interpret the message. Otherwise, an error message will be generated requiring the intervention of a customer services operator. This is clearly undesirable in an otherwise automated facility and will delay fulfilment of a service to the customer. In the following description, the exchange of data messages between the CRM platform 11 and the service management platform 13 will be explained further to illustrate how the correct message structure is conveniently ensured, although the same principle applies to the exchange of messages between any two or more components.

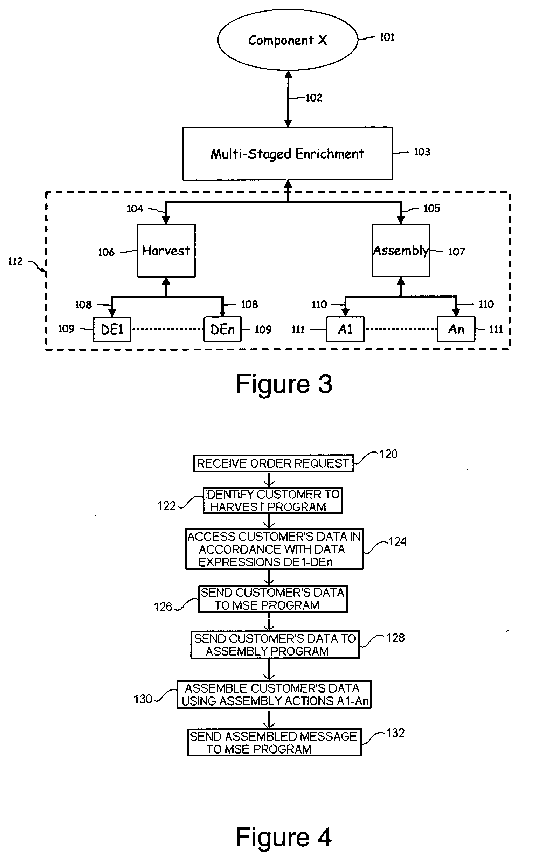

Referring to Figure 3, the functional components for generating a structured data message for subsequent transmission to the service management platform 13 are shown. The components reside within the customer management platform 11 and, in operation, respond to fulfilment requests sent from an initiating software component, referred to here as component X 101. Component X 101 sends the order request to a multi-stage enrichment (MSE) program 103 which is a self-contained program configured to generate the fulfilment request message by interacting with various other components indicated as box 112. Specifically, the MSE program 103 is arranged to communicate with a harvest program 106 which copies (or 'harvests') data stored in one or more databases (not shown) in accordance with one or more data expressions DE1-DEn 109. The MSE program 103 also communicates with an assembly program 107 via an application program interface (API) 110. The assembly program 107 is responsible for structuring the harvested data in accordance with a plurality of assembly actions A1-An 111 so that the data is suitable for receipt by the service management platform 13.

Referring to Figure 4, the main steps involved in generating a fulfilment request message are indicated. In a first step 120, an order request is received by the MSE program 103. The order request includes data identifying the customer to the MSE program 103, e.g. by specifying a customer reference number. In a second step 122, the MSE program 103 sends the identification data to the harvest program 106 which accesses one or more customer records associated with the identified customer, said records being held on one or more databases maintained by the service provider. In a third step 124, the harvest program 106 retrieves, or harvests, data from the or each database in accordance with the list of data expressions DE1-DEn which, in this case, specify the database and database fields from which data is to be taken. In a fourth step 126, the harvest program 106 sends the data back to the MSE program 103 which, in a fifth step 128, transfers the data to the assembly program 107. In a sixth step 130, the assembly program 107 assembles the harvested data into a predefined structure using the assembly actions A1-An. In a seventh step 132, the structured data is sent back to the MSE program 103 which in turn sends this back to the requesting component 101 where it is then available as a fulfilment request message ready for transmission to the service management platform 13.

Since data retrieval and assembly are performed by self-contained programs which operate in accordance with a list of data expressions DE1-DEn and assembly actions A1-An, it is straightforward to modify the form of fulfilment request message, both in terms of content and structure, should the service management platform 13 require it. All that is required is a change in the list of data expressions DE1-DEn and/or assembly actions A1-An rather than modifying a dedicated program responsible for generating the fulfilment request message.

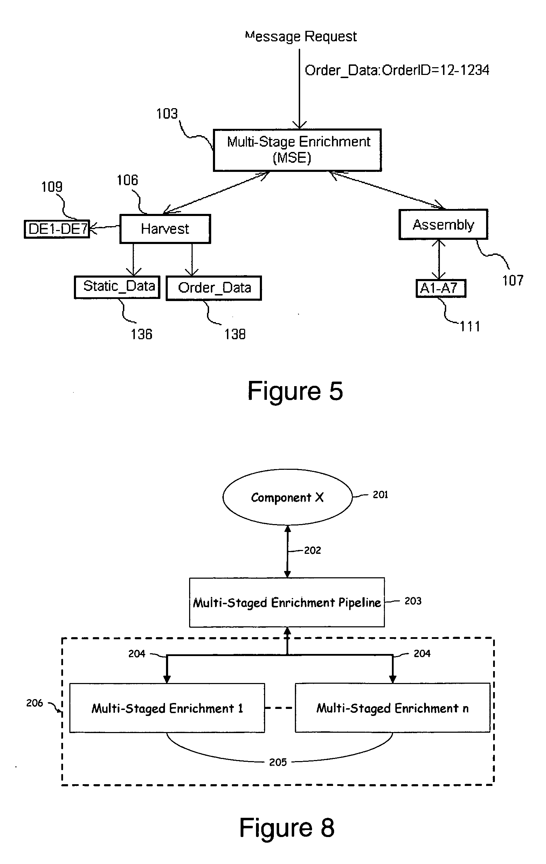

A more specific example of the above method will now be described with reference to Figures 5 to 7.

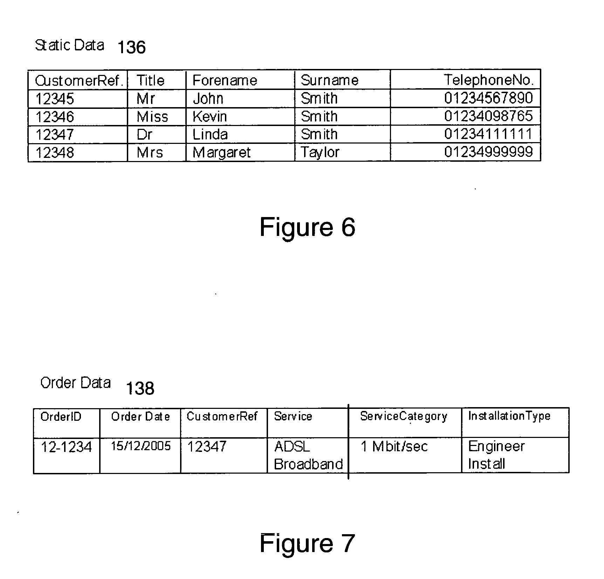

Referring to Figure 5, the main functional elements for generating a fulfilment request message are shown. In addition, first and second databases 136, 138 are shown connected to the harvest program 106. The first database 136, referred to as Static_Data, stores personal data for customers of the service provider. As indicated in Figure 6, the Static_Data database 136 stores a unique customer reference for each customer, as well as the customer's title, forename, surname and telephone number. The second database 138, referred to as Order_Data, stores data relating to all recently-submitted service orders. This data is received from the CRM platform 11 at the time the order is submitted, although not used until fulfilment is requested. Referring to Figure 7, the Order_Data database 138 stores an order identity number, the order date, the customer's reference number, a description of the service ordered, the service category and details of the installation type. In the present example, a single entry is stored in the Order_Data database 138 relating to a service request for a 1 Mbit/second ADSL broadband connection.

Referring collectively to Figures 5 to 7, initially, an order request message arrives at the MSE program 103. The order request message comprises the instruction Order_Data:Orderld=12-1234, thereby indicating that fulfilment is requested for an order having reference number12-1234. In the next step, the MSE program 103 transfers the instruction to the harvest program 106 which accesses the Order_Data database 138 and locates the record corresponding to reference number 12-1234. The harvest program 106 then retrieves data elements from this record in accordance with a number of data expressions DE1-DE7 109 indicated below. Note that expressions DE1-DE2 are retrieved from the Static_Data database 136 and so these expressions will include a statement joining the two databases together using a common parameter, namely CustomerRef=12347.

### Data Expressions

- DE1: OrderData:Order2CustomerRelationship:Title
- DE2: OrderData:Order2CustomerRelationship:Surname
- DE3: Order_Data:OrderID
- DE4: Order_Data:OrderDate
- DE5: Order_Data:Service
- DE6: Order_Data:ServiceCategory
- DE7: Order_Data:InstallationType

Following execution of each of the data expressions DE1-DE7 109 by the harvest program, the following list of data is provided back to the MSE program 103:
Dr, Smith, 12-1234, 15/12/2005, ADSL Broadband, 1 Mbit/second, Engineer Install.

In the next step, the above-mentioned list of data is sent to the assembly program 107. The assembly program 107 places each data item into a predefined structure in accordance with the list of assembly actions A1-A7 indicated below. In this example, each assembly action prints a referenced expression, and in addition, A2-A7 also add a new line character.

### Assembly Actions

- A1: print(DE1)
- A2: print(<newLine>+DE2)
- A3: print(<newLine>+DE5)
- A4: print(<newLine>+DE6)
- A5: print(<newLine>+DE7)
- A6: print(<newLine>+DE3)
- A7: print(<newLine>+DE4)

Following execution of each of the assembly actions A1-A7, the following structured message is sent back to the MSE program 103:
Dr
Smith
ADSL Broadband
1 Mbit/second
Engineer Install
12-1234
15/12/2005.

In the final step, the MSE program 103 sends the constructed message to the initiating software component, e.g. component X 101, from where it is forwarded to the service management platform 13 as a fulfilment request message having the predefined structure required by said platform.

In the above description, it will be noted that the MSE program 103 acts as a hub for the flow of data in the message generation process. This is the preferred method of inter-component communication. In theory, a more direct communication method may be used, e.g. by allowing the harvest program 106 and assembly program 108 to communicate directly without going through the MSE program 103.

A second embodiment of the invention will now be described. The second embodiment is similar to the first embodiment but includes further detail as to how the concept can be put into practice to generate XML data messages having a predefined structure. The embodiment again enables simplified development of software components that need to generate structured messages to support interaction with other software components. The responsibility for constructing the structured message is removed from the component initiating the interaction. Indeed, the component initiating the interaction simply retains responsibility for identifying the data sources which are to feed data into the structured message.

As in the first embodiment, two software definitions are employed, namely harvesting data expressions DE1-DEn, and assembly actions A1-An. Each data DE1-DEn is configured to access one of a number of data sources, e.g. databases. By executing a data expression against a data source, a data result is obtained. By executing all data expressions DE1-DEn against their respective data sources, the invention materialises a set of data results. Each assembly action A1-An is a defined piece of logic that the invention is able to invoke via a standard Application Programming Interface (API) to perform one of possibly many steps to assemble the data results into a structured message. The collection and sequence by which the assembly actions are invoked is itself subject to definition. In this embodiment, a number of configurable action types are provided to support the assembly of XML documents.

As with the first embodiment, the second embodiment provides a self-contained software component or program referred to as MSE. The role of the MSE program is to generate a structured XML message. XML is used simply for convenience, and it is not intended to restrict the present invention to this message format.

Table 1 is a list of acronyms and abbreviations used throughout the remainder of the specification.

**Table 1: Acronyms and Abbreviations**

| | |
|---|---|
| An | Assembly Action n |
| API | Application Programming Interface |
| ISE | Integrated Systems Environment |
| DEn | Data Expression n |
| JAR | Java Archive |
| JDOM | Java Document Object Model |
| MSE | Multi-Staged Enrichment |
| MSEP | Multi-Staged Enrichment Pipeline |
| POJO | Plain Old Java Object |
| UML | Unified Modelling Language |
| W3C | World Wide Web Consortium |
| XML | eXtensible Markup Language |
| XSLT | eXtensible Stylesheet Language Transformation |

Referring again to Figure 3, a client component 101 of the MSE program 103 makes a request 102 that identifies the data sources that the invoked MSE instance requires in order to fulfil its associated enrichment definition 112. MSE 103 fulfils its client request by performing a Harvest 106 function against the supplied data sources, using the configured Data Expressions DE1 through to DEn 109. Each DEn 109 is configured to act against one or more of the client-supplied data sources. In this way, the Harvest function materialises a set of data results, which are communicated back 104 to MSE 103. These data results are then, in turn, communicated to the Assembly program 107 via an API 105.

It is the role of the Assembly program 107 to invoke each of the configured assembly actions A1-An 111. Each assembly action A1-An 111 is presented, via a standard API 110, with the structured message constructed thus far, together with the data results materialised by the harvest program 106. In this way, each assembly action A1-An 111 can perform its part in assembling the structured message. Once each assembly action is complete, the assembled structured message is returned to the MSE program 103 via the API 105, which in turn, returns the message to the client component 101 via the API 102.

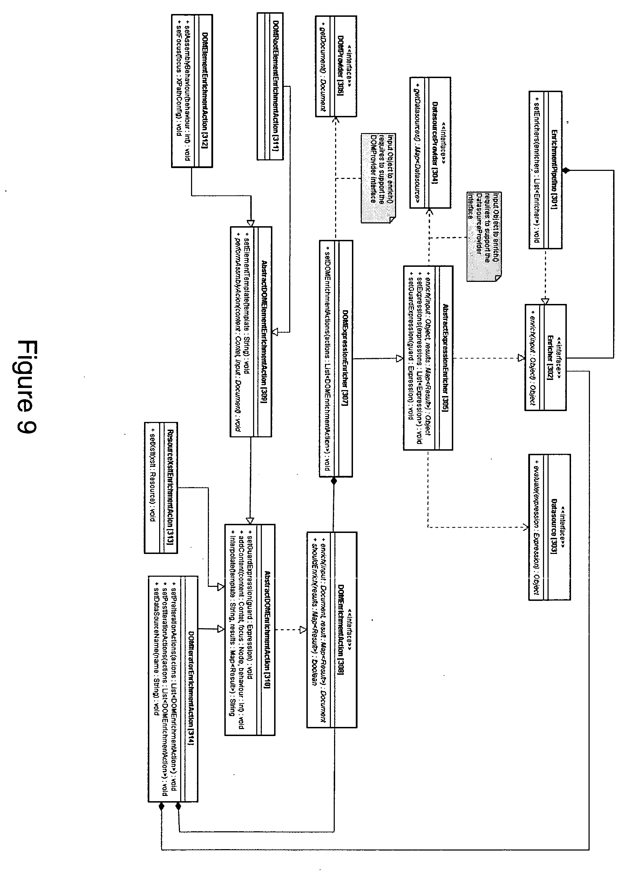

Referring now to Figure 8, the first and second embodiments support the ability to pipeline a series of MSE program instances 205 by supporting a multi-staged enrichment pipeline MSEP 203 which, in turn, supports the same interface 202 to its client component 201 as that supported by an MSE instance. That is, the interface 202 is technically identical to that supported by the MSE program 102, and thus an invocation to MSEP (202) can be substituted for an invocation to the MSE program 102, without any change in the client component 201. A client component 201 of MSEP 203 makes a request 202 that identifies the data sources that MSEP 203 requires to make a sequenced set of requests to the contained MSE instances MSE1-MSEn 205. The behaviour of each MSE instance 205 is as described with reference to Figure 3, with the output of each MSE instance serving as input to the next MSE instance in the pipeline.

The purpose of providing a multi-stage enrichment pipeline is to generate a single message using a plurality of discrete steps. The output from a first enrichment element in the pipeline is fed to a second enrichment element for further enrichment, and so on until each of the plurality of enrichment elements has been executed. This is a useful technique for structuring a complex enrichment activity into a series of smaller activities. It is also useful in cases where different message types share a common fragment (for example some form of standard message header) allowing one enrichment element to be shared across multiple message-type specific enrichment pipelines

Referring to Figure 9, a UML class diagram defines the key interfaces and classes used in the preferred embodiment of the current invention.

The Enricher(302) interface represents the fundamental interface within MSE. Through the single enrich0 method on this interface, a client can access the services of MSE. A "skeletal" input Object is passed as its only parameter, and it is this input Object that is enriched, and subsequently returned as the method return value.

The EnrichmentPipeline(301) class is shown to be an implementation of the Enricher(302) interface, which composes a List of instances implementing the Enricher(301) interface. It is the elements of this List that comprise the enrichment pipeline.

Datasource(303) is an interface via which data sources can be accessed in a consistent and uniform manner. Specifically, the method evaluate(), allows for an expression to be evaluated against the data source.

AbstractExpressionEnricher(305) is an abstract class that implements the Enricher(302) interface and has the capability of obtaining the required data sources from its input object, which is required to implement the DatasourceProvider(304) interface for this purpose. A further capability of this abstract implementation is the option to apply a "guard" to its enrichment activities. This guard takes the form of a Boolean expression, which when true indicates that the implementation should perform its configured enrichment actions and, conversely, when false implies that these actions should be suppressed. The ability to apply a guard to the enrichment process is a key enabler to supporting conditional enrichment within MSEP. The key function of the AbstractExpressionEnricher(305) implementation, however, is to evaluate all of its configured expressions against the determined data sources. Once evaluated, the AbstractExpressionEnricher(305) delegates the enrichment process, where not suppressed by the guard, to the abstract method enrich(input : Object, results : Map<Result>) : Object.

DOMExpressionEnricher(307) is a concrete implementation of the abstract class AbstractExpressionEnricher(305). This class is configured to compose a List of objects implementing the DOMEnrichmentAction(308) interface. The DOMExpressionEnricher(307) starts by acquiring the base XML Document object from its input Object, which is required to implement the DOMProvider(306) interface for this purpose. Once this is established, the DOMExpressionEnricher(307) implementation iterates over its configured List of DOMEnrichmentAction(308) objects, first invoking the shouldEnrich() method, and when this returns true, further invoking the action's enrich() method.

The AbstractDOMEnrichmentAction(310) is an abstract implementation of the DOMEnrichmentAction(308) interface. This class provides basic services in three areas:
1. The ability to "guard" an individual action, in the same way that was described above in relation to the AbstractExpressionEnricher(305).
2. The ability to interpolate results determined from expression evaluation into string templates that contain placeholder tokens for this purpose.
3. Various operations to add content elements to the XML Document being enriched.

AbstractDOMElementEnrichmentAction(309) is a convenience class used to support the implementation of the DOMRootElementEnrichmentAction(311) and DOM ElementEnrichmentAction(312) classes described later.

DOMRootElementEnrichmentAction(311) class supports the construction of a complete XML document based on a template of this XML document containing placeholder tokens into which the results obtained from expression evaluation are interpolated. This class is useful where all or most of the target XML structure is fixed. Its partner action DOMElementEnrichmentAction(312), described next, is useful in the situations where not all of the target XML structure is fixed and consequently various XML elements need to be conditionally added to a skeletal structure typically established by the DOMRootElementEnrichmentAction(311) action.

DOMElementEnrichmentAction(312) class supports a fine-grained enrichment of an partially formed XML document. The action materialises an XML element (generally with its own substructure), and then has the ability to add this to the current partially formed XML document in one of a number of pre-defined ways. The precise assembly behaviour is configured via the class' assemblyBehaviour property, set via the setAssemblyBehaviour() method. Currently, the preferred embodiment of this class supports the following behaviours illustrated in the table below:-

**Table 2: assemblyBehaviour property values for DOMElementEnrichmentAction(312)**

| **Value** | **Meaning** | **Example** |
|---|---|---|
| INSERT_BEFORE | Inserts the XML element before the element identified as the focus for insertion | <element/> <focus/> |
| INSERT_AFTER | Inserts the XML element after the element identified as the focus for insertion | <focus/> <element/> |
| INSERT_FIRST_CHILD | Inserts the XML element as the first child element of the element identified as the focus for insertion | <focus> <element/> ... </focus> |
| INSERT_LAST_CHILD | Inserts the XML element as the last child element of the element identified as the focus for insertion | <focus> .... <element/> </focus> |
| WRAP_FIRST_CHILD | Inserts the XML element at the position identified as the focus, and wraps the element previously at that position as its first child element | <element> <focus/> ... </element> |
| WRAP_LAST_CHILD | Inserts the XML element at the position identified as the focus, and wraps the element previously at that position as its last child element | <element>... <focus/> </element> |
| REPLACE | Replaces the element at the position identified as the focus. | <element/ > |

ResourceXsItEnrichmentAction(313) class supports a special type of enrichment called XSLT. XSLT is a language for transforming XML documents standardised by the World Wide Web Consortium (W3C). Via this action type, the constructed XML document can be subjected to an XSL transformation where required.

DOMIteratorEnrichmentAction(314) class supports those cases when the result of expression evaluation produces a List of Datasources, rather than a single result. This action iterates over the List of Datasources, one at a time, invoking its composed Enricher(302) to enrich the Datasource into the current XML document. In this way, it is possible to construct XML messages which contain iterations of elements, the number of which is not known at design time.

Having described the key interfaces and classes with respect the UML class diagram of Figure 9, the remaining description is intended to demonstrate a scenario in which a fixed XML output structure is generated. The XML structure for this example can be defined as a simple template using special tokens through which data resulting from expression evaluation can be injected into the template at runtime.

### XML Template

Consider the situation where XML documents need to be produced by a software component, except that the first-name, last-name and phone attributes, as well as the text content of the message tag, need to be injected at runtime. The structure of XML document expected by a recipient software component is shown below:

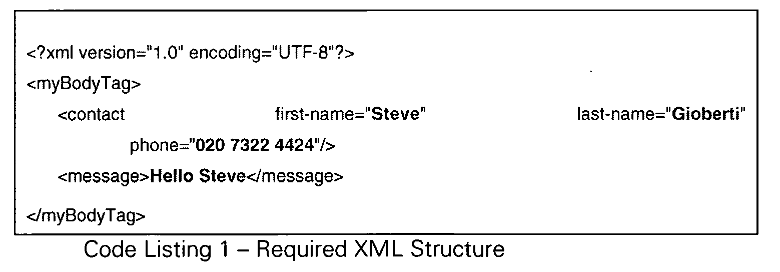

To achieve this, a template using placeholders for the variable data is constructed as follows:

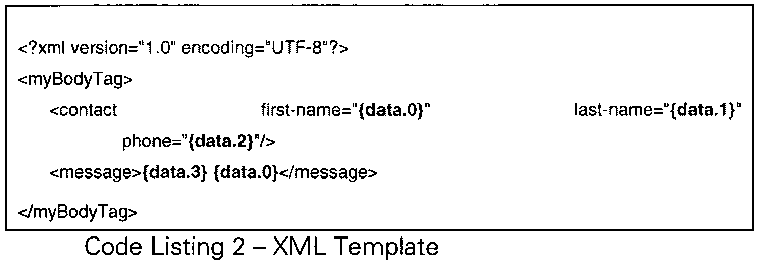

With this XML template in place, it simply remains to define a set of expressions and data sources that can materialise the necessary runtime values for the placeholders used in the XML structure shown in code listing 1.

### Expressions

The present embodiment uses an expression format used by the Amdocs CRM6 software package (see www.amdocs.com for further information). There is, however, no requirement to use the AmdocsCRM6 product and it will be appreciated that other formats may be used.

Two separate data sources are queried by expressions to generate the values required to support this example. The first data source (referred to as $Focus) is a specific database record in a table called contact. This first data source provides access to values for the contact's first-name, last-name and phone details. The second data source (referred to as $Object) is a Plain-Old-Java Object (POJO) data source. This second data source provides the value used for the first part of the greeting message to be used within the XML <message> element.

With these two data sources recognised, it is then possible to define a set of expressions against these data sources, to materialise the values needed to substitute the placeholders shown previously in Code Listing 1:-

**Table 3: Placeholder to Expression Mappings**

| | |
|---|---|
| {data.0} | $Focus:first_name |
| {data.1} | $Focus:last_name |
| {data.2} | $Focus:phone |
| {data.3} | $Object:MessagePrefix |

### POJO Datasource

The simple data source that feeds the $Object:MessagePrefix expression is based on a plain-old-java object (POJO) that exposes a property called messagePrefix. The only requirement on this class is that it exposes a publicly-accessible method with the following signature:-

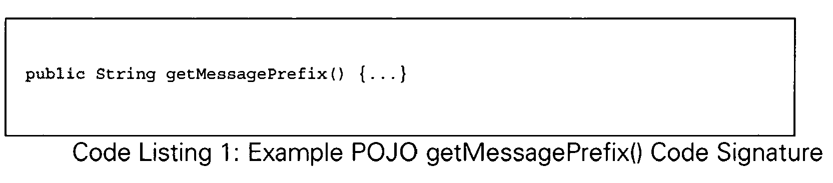

### Focus Datasource

The second data source referenced in the expressions in table 3 is the $Focus data source which feeds the $Focus:first_name, $Focus:last_name and $Focus:phone expresions. A $Focus data source is defined by the AmdocsCRM6 software package, and has the capability of exposing the attributes associated with a specific database record by evaluating expressions against it.

### Defining the Reference Data via a Spring Bean Factory

The second preferred embodiment uses the Spring framework to manage its reference data. Again, the Spring framework is used for exemplary purposes only and is by no means essential to the invention. The Spring Bean factory configuration file shown below, defines the greetingEnricherBean that can materialise the XML document defined in code listing 1.

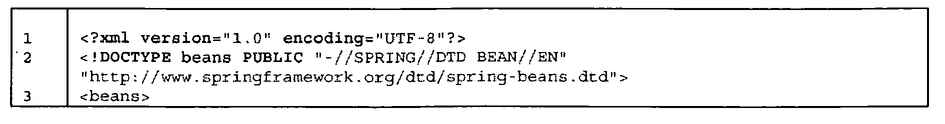

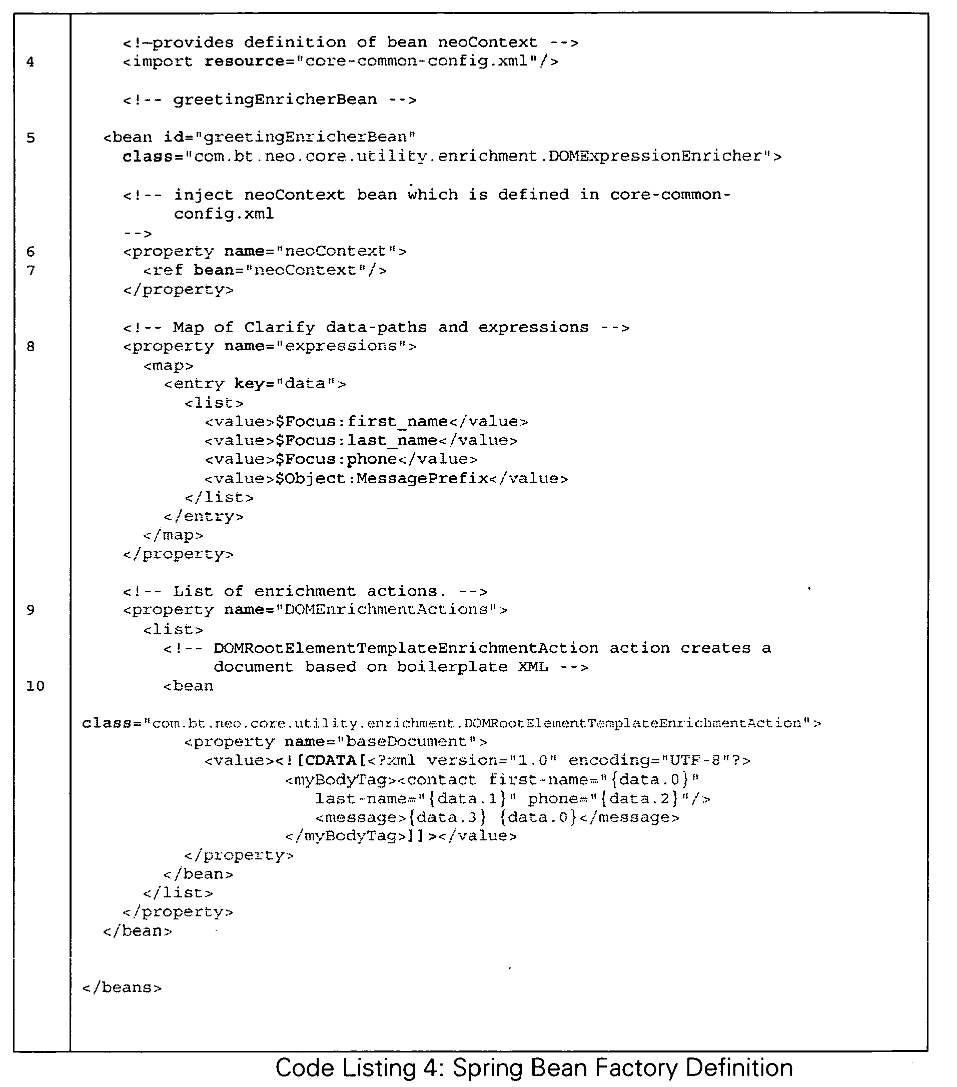

The following comments refer to specific lines of code in code listing 4.

Lines 1, 2 and 3 represent a standard preamble that exists in all Spring bean definition files. Line 4 represents an import of a NEO Core configuration file called core-common-config.xml, which provides a definition of the neoContext bean referenced on line 7. The details of this file, and those associated with the neoContext, relate to the low-level internal implementation details of MSE, and are not discussed further in this document.

Line 5 represents the start of our example MSE configuration. This line simply identifies the implementing java class for the greetingEnricherBean that in this case is the DOMExpressionEnricher(307) class. That implements the Enricher(302) interface described earlier. Lines 6 and 7 inject the neoContext into the greetingEnricherBean, which is required to satisfy the DOMExpressionEnricher(307) implementation. Between lines 8 and 9 exists a definition of the expressions used by the greetingEnricherBean. As can be seen from code listing 4, the expressions property is actually a Java object that implements the Map interface (e.g. a HashMap). This feature allows for expressions to be grouped, but is not relevant to this example. This example only uses a single expression group registered under the map entry key "data". Line 9 introduces another key property exposed by the JAVA class that implements the greetingEnricherBean, namely the DOMExpressionEnricher(307) class. The DOMEnrichmentActions property defines a number of actions that are run in the listed sequence to enrich the input XML. In this example, the greetingEnricherBean contains only a single action based on the class DOMRootElementTemplateEnrichmentAction(311) which is defined at line 10. This action type specialises in constructing a totally new XML document based on a template provided via its baseDocument property. Notice how the baseDocument property, representing the XML template discussed in code listing 2, is wrapped in a CDATA section to avoid its XML being confused with the rest of the Spring XML definition.

### The Test Class GreetingEnricherBean

Now that all of the definitional aspects have been described, it simply remains to create the test JAVA class GreetingEnricherBean that employs the framework to perform the XML enrichment.

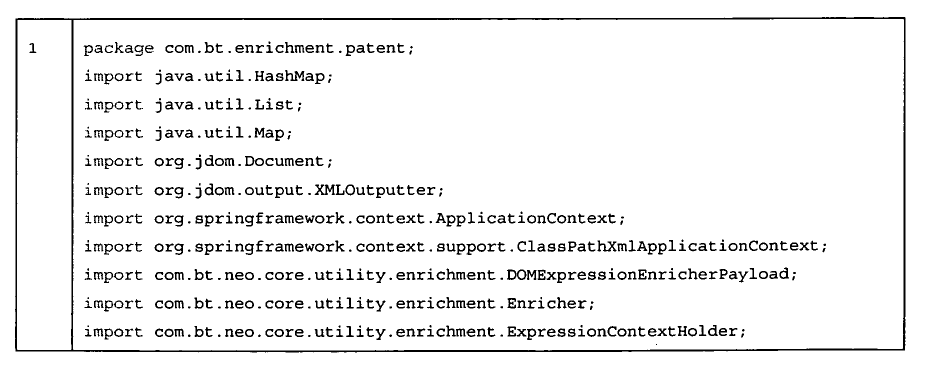

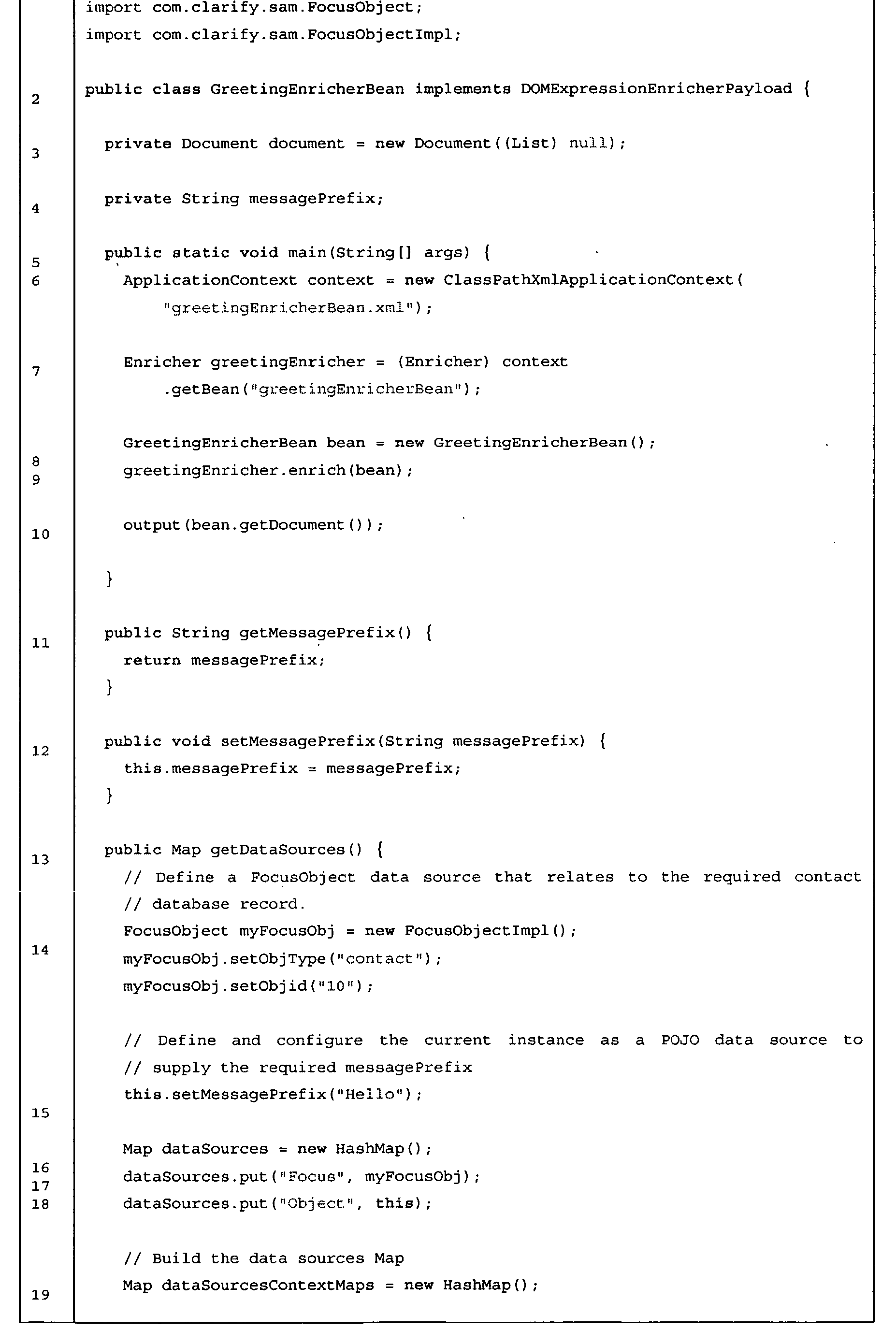

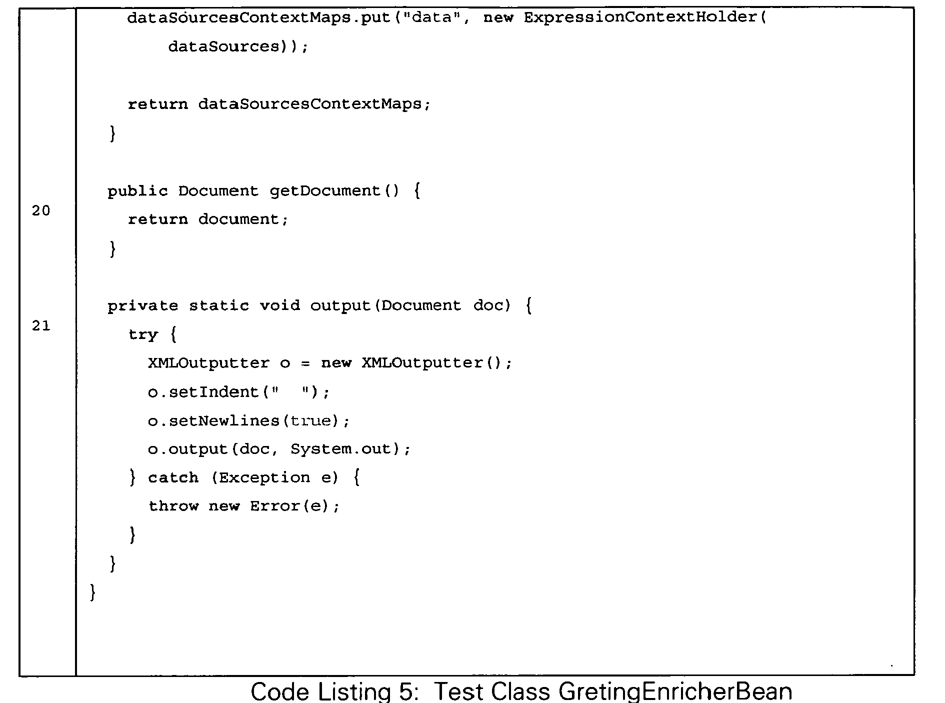

The following comments refer to specific lines of code in code listing 5.

Lines 1 and 2 define the package and import classes used by the GreetingEnricherBean class. Line 2 contains an important aspect of the class' implementation. Specifically, this line shows that the class implements the interface DOMExpressionEnricherPayload. This enricher framework interface combines the two interfaces DatasourceProvider(304) and DOMProvider(306) and contains two methods; getDocument() and getDatasources() that are discussed in further detail later in this section. Line 3 shows how the class maintains an instance variable that is initialised to an empty JDOM Document on construction. Line 4 shows how the class maintains an instance variable that serves the implementation of the messagePrefix property. Line 5 begins the definition of the static main() method that on execution represents the entry point to the test JAVA program. Line 6 shows how via the Spring class ClassPathXmlApplicationContext, the Spring definition file shown in code listing 4 is read, and a Spring ApplicationContext returned into the local variable context. Line 7 then uses the Spring ApplicationContext instance called context to acquire an instance of the "greetingEnricherBean" defined in the Spring configuration file shown in code listing 4. This instance is stored in the local variable greetingEnricher. Line 8 illustrates the construction of a new instance of the GreetingEnricherBean class from the static main() method, which at line 9 is passed into an invocation of the enrich() method invoked against the greetingEnricher. This is possible, because the GretingEnricherBean class implements the interface DOMExpressionEnricherPayload interface. Line 10 shows a local invocation to the static output() method defined at line 21. Lines 11 and 12 show the definition of the getter and setter methods for the property messagePrefix. This follows the JAVA properties conventions. Line 13 begins the definition of the method getDataSources(), which is required by virtue of the fact that the test class GreetingEnricherBean implements the MSE interface DOMExpressionEnricherPayload. Line 14 shows how the AmdocsCRM6 FocusObject data source is configured to relate to a record in the contact database table which has the primary key (objid) value of 10. This record is the contact record for the contact with a first-name attribute value of "Steve", a last-name attribute value of "Gioberti" and a phone attribute value of "020 7322 4424". Line 15 represents an invocation of the setMessagePrefix() method which sets the messagePrefix property to the value of "Hello". Lines 16, 17 and 18 show how the data sources myFocusObj and the current instance of the GreetingEnricherBean POJO are registered as data sources in the JAVA Map dataSources. Line 19 shows how the data sources defined in the dataSources variable are registered with the dataSourcesContextMap under the group key of data. Line 20 begins the definition of the method getDocument(), which is required by virtue of the fact that the test class GreetingEnricherBean implements the MSE interface DOMExpressionEnricherPayload.

Running the test JAVA program, with all supporting JAR files accessible through the CLASSPATH, produces the expected output shown below in code listing 6.

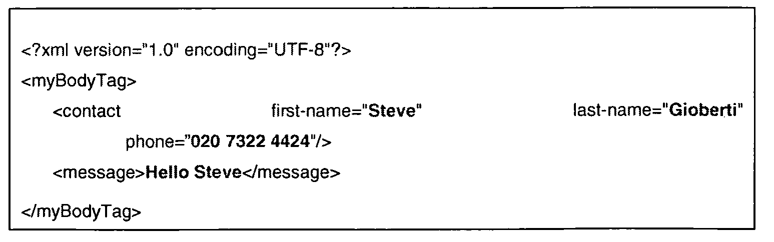

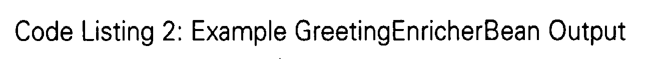

Through this example it becomes clear how the test program GreetingEnricherBean is independent of the XML format of the generated message, because this is contained in the Spring configuration file defined in code listing 1, and is also independent of the of the database navigation code required to access the $Focus data source, again because this is defined in the Spring configuration. It is also clear that the test program is independent of how the harvested results are to be inserted into the target XML message. The test program does, however, exhibit a minor dependency on the POJO used to supply the messagePrefix property, but this arises because the test program was designed to implement this property only for reasons relating to presentational simplicity.

## Claims

1. A method of generating a data message comprising a plurality of data elements retrieved from one or more data sources, the method comprising:
(a) providing a first software element having access to (i) the or each data source and (ii) storage means storing a plurality of data expressions, each data expression referencing a respective data item stored in the or each data source;
(b) receiving, at the first software element, a request message identifying the or each data source;
(c) in response to receipt of said request message, accessing the or each data source and retrieving therefrom each data element referenced by the data expressions in the storage means; and
(d) arranging the data elements into a predetermined format to provide a data message.

2. A method according to claim 1, wherein step (d) comprises arranging the data elements into a predetermined order.

3. A method according to claim 1 or claim 2, wherein at least one data source stores a plurality of records, each of which comprises data elements stored in respective fields, and wherein the request message further identifies at least one record therein and each data expression references a respective field of the or each record.

4. A method according to any preceding claim, wherein, following receipt of the request message in step (b), the first software element sends a retrieval request to a second software element that performs the step of accessing and retrieving each referenced data element.

5. A method according to claim 4, wherein, following retrieval of the data elements, the second software element sends said data elements to the first software element.

6. A method according to any preceding claim, wherein the first software element has access to a further storage means storing assembly instructions indicating the order in which retrieved data items are to be arranged in the data message.

7. A method according to claim 6, further comprising sending the retrieved data elements to a third software element that performs the step of arranging the data elements into a predetermined order in accordance with the assembly instructions.

8. A method according to any preceding claim, wherein the data message generated is an XML document.

9. A method of generating a data message, the method comprising:
(a) providing a first software element having access to (i) one or more data sources (ii) first storage means storing a plurality of data expressions, each data expression referencing a respective data item stored in the or each data source, and (iii) second storage means storing assembly instructions indicating the order in which data items are to be arranged in the data message;
(b) receiving, at the first software element, a request message identifying the or each data source;
(c) in response to receipt of said request message, accessing the or each data source and retrieving therefrom each data element referenced by the data expressions in the storage means; and
(d) arranging the retrieved data elements into the order indicated by the assembly instructions, in the second storage means, thereby to provide a data message.

10. A method of communicating a data message between a first software element and a second software element, the second software element being configured to receive a data message comprising a plurality of data items in a predetermined order, the method comprising:
(a) generating a data message using the method according to claim 9; and
(b) sending the message so generated from the first software element to the second software element.

11. A computer program comprising a set of instructions for causing a computer to generate a data message comprising a plurality of data elements retrieved from one or more data sources, the method comprising : (a) providing access to (i) the or each data source and (ii) storage means storing a plurality of data expressions, each data expression referencing a respective data item stored in the or each data source; (b) receiving a request message identifying the or each data source; (c) in response to receipt of said request message, accessing the or each data source and retrieving therefrom each data element referenced by the data expressions in the storage means; and (d) arranging the data elements into a predetermined order to provide a data message.

12. A system for generating a data message which comprises a plurality of data elements retrieved from one or more data sources, the system comprising processing means arranged to perform the steps of (a) providing a first software element having access to (i) the or each data source and (ii) storage means storing a plurality of data expressions, each data expression referencing a respective data item stored in the or each data source; (b) receiving, at the first software element, a request message identifying the or each data source; (c) in response to receipt of said request message, accessing the or each data source and retrieving therefrom each data element referenced by the data expressions in the storage means; and (d) arranging the data elements into a predetermined order to provide a data message.
